# DEMANDE DE BREVET EUROPEEN

(11) **EP 1 092 589 A1**
(43) Date de publication de la demande: **18.04.2001**
(21) Numéro de dépôt: 00420209.9
(22) Date de dépôt: 13.10.2000
(51) Int. Cl.: B60R 1/076, B60R 1/06

(54) **Système de réglage de la position angulaire d'un bras de rétroviseur extérieur de véhicule**

(30) Priorité: 14.10.1999 FR 9913049
(71) Demandeur: Appareillage R.B.E., 69530 Brignais (FR)
(72) Inventeur: Prost, Dominique, 69004 Lyon (FR); Figura, Georges, 69530 Brignais (FR)
(74) Mandataire: Maureau, Philippe

(57) **Abrégé**

L'embase (2) a une forme de chape et le bras présente, au niveau de son extrémité destinée à être reliée à l'embase (2), une face convexe (4a) de forme cylindrique. L'embase (2) et le bras délimitent, lorsque le bras est monté sur l'embase (2), un espace entre cette face convexe (4a) et ladite partie centrale (10) de l'embase (2).

Le système comprend au moins un bloc (6) en forme de coin et des moyens (7) de déplacement de ce bloc ; ledit bloc (6) est conformé pour pouvoir être engagé dans l'espace précité selon une direction perpendiculaire à l'axe de pivotement du bras, et être serré de manière à ce que ses faces latérales viennent étroitement en appui contre ladite face convexe (4a) du bras et ladite partie centrale (10) de l'embase (2), et que le bloc (6) exerce ainsi une contrainte sur ladite broche (5).

## Description

La présente invention concerne un système de réglage de la position angulaire d'un bras par rapport à une embase sur laquelle ce bras est monté pivotant. Ce système est notamment destiné au réglage en position d'un bras comportant un rétroviseur par rapport à une embase fixée à un véhicule, ce véhicule étant en particulier un véhicule utilitaire de type autocar ou poids lourd.

Dans certains cas, et en particulier dans le cas d'un rétroviseur équipant un véhicule tel que précité, un bras doit être réglé en position angulaire par rapport à l'embase qui le comporte et doit pouvoir être parfaitement maintenu dans la position choisie, nonobstant diverses contraintes exercées sur ce bras, en particulier des vibrations.

Une autre contrainte est également de supprimer tout jeu fonctionnel entre le bras et l'embase, de telle sorte que des vibrations subies par l'embase ne soient pas amplifiées par le bras et transmises au rétroviseur. De telles vibrations gênent en effet la vision au travers du rétroviseur.

Une contrainte supplémentaire réside dans le fait de pouvoir modifier facilement et rapidement le réglage du bras, selon les besoins.

Il existe différents systèmes de réglage de la position angulaire d'un bras comportant un rétroviseur par rapport à une embase supportant ce bras, mais ces systèmes ne donnent toutefois pas parfaitement satisfaction en ce qui concerne les différentes contraintes précitées.

En particulier, un système existant comprend un alésage conique aménagé dans l'extrémité du bras devant être relié à l'embase et une broche présentant une portée conique ; cette broche est engagée dans ledit alésage et est serrée axialement par rapport à l'embase de manière à serrer ladite portée conique contre la paroi du bras délimitant ledit alésage conique ; la broche comprend des méplats qui prennent appui contre des méplats correspondants que comprend l'embase pour caler cette broche en rotation par rapport à cette embase.

Ces méplats n'assurent pas une bonne immobilisation de la broche par rapport à l'embase, de sorte que les vibrations transmises à l'embase par le véhicule sont amplifiées au niveau du bras. De plus, ce système est relativement complexe à fabriquer et difficile à manipuler en vue de la modification de l'angle du bras par rapport à l'embase.

Il convient également de signaler que les systèmes existants diffèrent d'un type de véhicule à l'autre, ce qui ne facilite pas l'entretien ou la gestion des pièces détachées concernant ces systèmes.

La présente invention vise à remédier à l'ensemble de ces inconvénients en fournissant un système de réglage permettant à la fois de parfaitement maintenir le bras dans la position choisie, nonobstant les contraintes exercées sur ce bras, de supprimer tout risque d'amplification des vibrations transmises au bras par l'embase, et de modifier facilement et rapidement le réglage du bras selon les besoins.

Le système qu'elle concerne comprend, de manière connue en soi :
- une embase en forme de chape, c'est-à-dire comprenant une partie centrale fixée à un support et deux branches latérales parallèles percées de trous coaxiaux ;
- un bras comprenant un trou, ou plusieurs trous coaxiaux, qui peu(ven)t venir en coïncidence avec les deux trous desdites branches de l'embase ;
- une broche apte à être engagée au travers des trous de l'embase et du bras, permettant le pivotement du bras par rapport à l'embase, et
- des moyens de serrage, permettant, en position de serrage, d'immobiliser le bras par rapport à l'embase dans une position angulaire déterminée.

Selon l'invention,
- le bras présente, au niveau de son extrémité destinée à être reliée à l'embase, une face convexe de forme cylindrique centrée sur l'axe du trou que comprend ce bras ;
- l'embase et le bras sont conformés pour délimiter un espace entre cette face convexe et ladite partie centrale de l'embase lorsque le bras est monté sur l'embase, et
- lesdits moyens de serrage comprennent au moins un bloc et des moyens de déplacement de ce bloc ; ledit bloc a une forme de coin et est conformé pour pouvoir être engagé dans l'espace précité, ce bloc présentant, sur l'un de ses côtés latéraux, une face concave de forme cylindrique correspondant à celle de ladite face convexe du bras, et, sur son côté latéral opposé, une face propre à prendre appui, par une large surface, contre ladite partie centrale de l'embase; les moyens de déplacement de ce bloc sont conformés pour permettre de déplacer le bloc selon une direction perpendiculaire à l'axe de pivotement du bras, et de serrer ce bloc entre ladite face convexe et ladite partie centrale de l'embase, de manière à ce que les faces latérales précitées de ce bloc viennent étroitement en appui contre, respectivement, ladite face convexe du bras et ladite partie centrale de l'embase, et que le bloc exerce ainsi une contrainte sur ladite broche.

En position de serrage, ce bloc s'applique étroitement contre la face convexe du bras, selon une large surface, ce qui permet une bonne immobilisation du bras par rapport à l'embase. Ce bloc permet également d'exercer ladite contrainte sur la broche, qui supprime les jeux fonctionnels existant entre le bras et la broche ainsi qu'entre la broche et l'embase. Cette suppression de jeux permet de parfaitement lier le bras et l'embase, ce qui supprime ou tout au moins réduit fortement la transmission au bras des vibrations subies par l'embase.

De préférence, le système comprend deux blocs tels que précités, dont chacun est placé d'un côté du plan médian longitudinal du bras et est associé à des moyens pour son déplacement.

La surface de contact de ces deux blocs avec la face convexe du bras est, de cette manière, doublée, de même que la contrainte exercée, ce qui permet d'assurer la parfaite immobilisation du bras par rapport à l'embase, ainsi qu'une parfaite liaison du bras et de l'embase.

Avantageusement, dans ce cas, les moyens de déplacement de ces blocs sont communs à ces deux blocs, c'est-à-dire permettent le serrage simultané des deux blocs.

La structure du système s'en trouve notablement simplifiée.

Ces moyens de déplacement peuvent notamment être constitués par au moins un boulon traversant les blocs.

Ce boulon est d'une manipulation facile et rapide pour permettre de modifier, le cas échéant, l'orientation angulaire du bras par rapport à l'embase.

Selon une forme de réalisation préférée de l'invention, l'extrémité du bras destinée à être reliée à l'embase comporte une bague cylindrique pouvant pivoter par rapport à elle, cette bague étant destinée à recevoir ladite broche à travers son alésage ; la portion de la paroi latérale de cette bague tournée vers l'extérieur du bras constitue ladite face convexe du bras tandis que la portion de la paroi latérale de cette bague tournée vers le bras comprend au moins une cannelure ; cette même extrémité du bras comprend, entre elle et ladite bague, une tige sollicitée par au moins un ressort en direction de l'axe de la bague, cette tige et ce ressort étant conformés de manière à ce que la tige soit normalement maintenue dans ladite cannelure et qu'elle immobilise ainsi le bras en rotation par rapport à ladite bague, mais ledit ressort est conformé pour se comprimer en cas d'exercice d'une contrainte sur le bras tendant à faire pivoter ce bras par rapport à la bague, de manière à autoriser l'échappement de la tige hors de la cannelure et à permettre ainsi de libérer le pivotement du bras.

Ce système de cannelure et de tige permet de libérer le pivotement du bras en cas de nécessité, notamment en cas de choc.

Selon une forme de réalisation préférée de l'invention dans ce cas, ladite extrémité du bras comprend deux alésages borgnes dans chacun desquels sont placés un ressort et une pièce cylindrique contre laquelle porte ce ressort ; ladite pièce cylindrique peut coulisser dans ledit alésage et comprend, au niveau de son extrémité axiale opposée au ressort, une rainure pour sa prise d'appui contre la tige.

Ces deux ensembles ressort - pièce cylindrique permettent de parfaitement solliciter la tige en vue du maintien normal de cette dernière dans ladite cannelure.

Avantageusement, la paroi délimitant le fond de chaque alésage borgne est percée d'un trou axial tandis que chaque pièce cylindrique est également percée d'un trou axial, ces deux trous recevant, engagé à travers eux, un boulon permettant de comprimer le ressort pour permettre le dégagement volontaire de la tige hors de la cannelure.

De préférence, la bague comprend plusieurs cannelures pour le positionnement du bras selon différentes positions angulaires par rapport à l'embase.

Pour sa bonne compréhension, l'invention est à nouveau décrite ci-dessous en référence au dessin schématique annexé représentant, à titre d'exemple non limitatif, une forme de réalisation préférée du système qu'elle concerne.

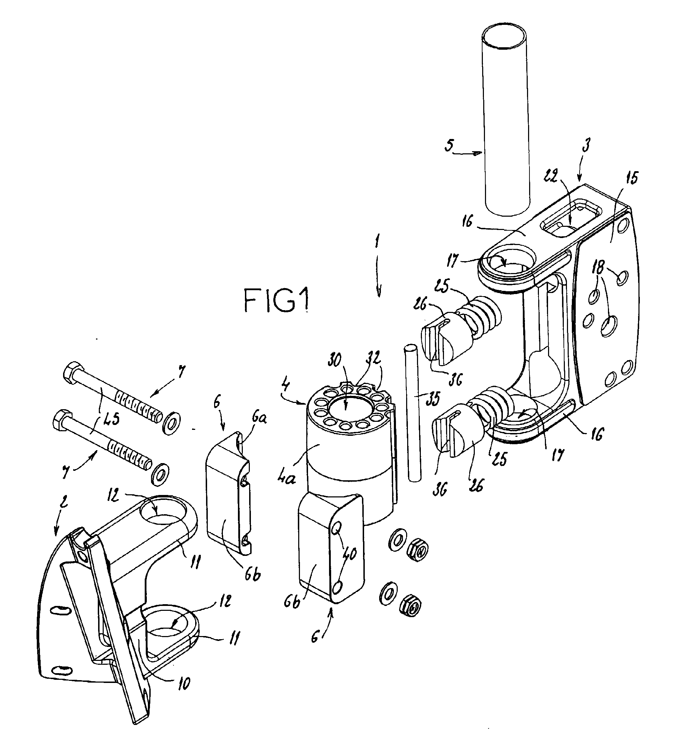

La figure 1 en est une vue en perspective éclatée ;
la figure 2 en est une vue de côté, à l'état monté, et
la figure **3** en est une vue en coupe longitudinale, selon la ligne **III-III** de la figure **2**.

Les figures représentent un système 1 de réglage de la position angulaire d'un bras (non représenté) par rapport à une embase 2 sur laquelle ce bras est monté pivotant. Ce système est notamment destiné au réglage en position d'un bras comportant un rétroviseur, par rapport à une embase fixée à un véhicule, ce véhicule étant en particulier un véhicule utilitaire de type autocar ou poids lourd.

En référence aux figures, le système 1 comprend, outre l'embase 2, une platine 3, à laquelle le bras est destiné à être fixé, une bague 4, une broche 5, deux blocs 6 et deux boulons 7.

L'embase 2 a une forme de chape, c'est-à-dire comprend une partie centrale 10 destinée à être fixée au véhicule et deux branches latérales parallèles 11 percées de trous coaxiaux 12.

La platine 3 comprend un bloc central 15 et deux pattes latérales parallèles 16 percées de trous coaxiaux 17.

Le bloc 15 présente une série de trous 18 pour son assemblage au bras et comprend deux alésages 19 débouchant dans sa face recevant la bague 4, dont le fond est limité par un voile transversal 20. Ce bloc 15 présente également une cavité 21 qui débouche, par des fenêtres 22, dans ses faces supérieure et inférieure.

Chacun des alésages 19 reçoit un ressort 25 et une pièce cylindrique 26 pouvant coulisser dans ledit alésage.

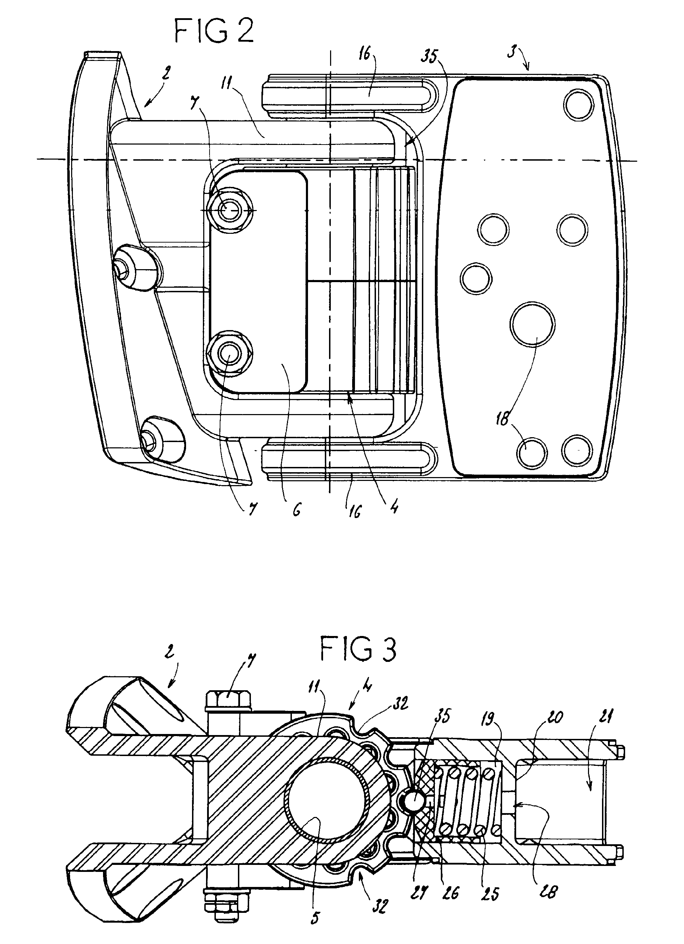

La figure 3 montre plus particulièrement que chaque pièce 26 est percée d'un trou central 27 et que le voile 20 est percé, coaxialement à chaque alésage 19, d'un trou 28 coaxial à celui de ladite pièce 26. Ces trous 27, 28 peuvent recevoir un boulon (non représenté) qui permet, par son serrage depuis la cavité 21, de comprimer plus ou moins le ressort 25.

La bague 4 présente une forme globalement cylindrique ; son alésage 30 est propre à venir en coïncidence avec les trous 17 et à recevoir la broche 5.

La portion de cette bague 4 qui est tournée vers l'extérieur par rapport à la platine 3 constitue une face convexe 4a centrée sur l'axe de cette bague 4, tandis que la portion de la paroi latérale de cette bague tournée vers la platine 3 comprend cinq cannelures 32.

La bague 4 peut pivoter par rapport à la platine 3.

Une tige 35 de forme cylindrique est propre à être engagée dans l'une ou l'autre de ces cannelures 32, cette tige 35 étant normalement pressée dans l'une de ces cannelures 32 par les ensembles ressorts 25 - pièces 26, ces dernières comprenant des rainures 36 qui reçoivent cette tige 35.

La force des ressorts 25 est réglée de manière à ce que la tige 35 soit normalement maintenue dans l'une desdites cannelures 32 et qu'elle immobilise ainsi la platine 3, et donc le bras, en rotation par rapport à la bague 4. Cette force est toutefois telle que lesdits ressorts 25 se compriment en cas d'exercice d'une contrainte sur le bras tendant à faire pivoter ce bras par rapport à la bague 4, de manière à autoriser l'échappement de la tige 35 hors de la cannelure 32 correspondante et à permettre ainsi de libérer le pivotement du bras.

Il se déduit de la forme de l'embase 2 et de l'ensemble platine 3 - bague 4 qu'un espace est délimité entre la face 4a et la partie 10 lorsque le bras est monté sur l'embase 2.

La broche 5 est apte à être engagée au travers des trous 12 et 17 ainsi que de l'alésage 30, pour permettre le pivotement du bras par rapport à l'embase 2. Cette broche 5 est constituée par un simple tube de matière rigide, notamment métallique.

Chaque bloc 6 a une forme de coin et est conformé pour pouvoir être engagé dans l'espace précité. Il présente, sur l'un de ses côtés latéraux, une face concave 6a de forme cylindrique correspondant à celle de la face 4a et, sur son côté latéral opposé, une face 6b propre à prendre appui, par une large surface, contre la partie 10.

Les deux blocs 6 sont percés de trous 40 parallèles à la face 6b, dans laquelle sont engagées les vis 45 des boulons 7.

Ainsi que cela se déduit des figures, ces deux boulons 7 permettent de déplacer les blocs 6 selon une direction perpendiculaire à l'axe de pivotement du bras, et de serrer ces blocs 6 entre la face 4a et la partie 10 de manière à ce que les faces 6a et 6b viennent étroitement en appui contre, respectivement, la face 4a et la partie 10, et à ce que les blocs 6 exercent une contrainte sur la broche 5.

En position de desserrage des boulons 7, les blocs 6 ne font pas obstacle au pivotement de l'ensemble bras - platine 3 - bague 4 autour de la broche 5, ce qui permet de régler précisément la position angulaire du bras par rapport à l'embase 2.

En position de serrage de ces boulons 7, les blocs 6 s'appliquent étroitement contre la face 4a et la partie 10, ce qui permet une parfaite immobilisation du bras par rapport à l'embase 2. Ladite contrainte permet quant à elle de supprimer les jeux fonctionnels existant entre les pattes 11 et la broche 5 ainsi qu'entre la broche 5 et la bague 4 afin de parfaitement lier le bras et l'embase 2, ce qui supprime, ou tout au moins réduit fortement, la transmission au bras des vibrations subies par l'embase 2.

Un nouveau réglage de la position angulaire du bras peut être simplement effectué en desserrant les boulons 7, en orientant le bras de la manière souhaitée puis en serrant à nouveau ces boulons 7.

L'invention fournit ainsi un système de réglage de la position angulaire d'un bras par rapport à une embase sur laquelle ce bras est monté pivotant, qui remédie aux inconvénients des systèmes homologues de la technique antérieure. En effet, ce système permet à la fois de parfaitement maintenir le bras dans la position choisie, nonobstant les contraintes exercées sur ce bras, de supprimer tout risque d'amplification des vibrations transmises au bras par l'embase, et de modifier facilement et rapidement le réglage du bras selon les besoins.

Il va de soi que l'invention n'est pas limitée à la forme de réalisation décrite ci-dessus à titre d'exemple mais qu'elle en embrasse, au contraire, toutes les variantes de réalisation. Ainsi, l'un des deux blocs 6 pourrait faire corps avec l'embase 2, le système 1 ne comprenant alors qu'un seul bloc mobile 6 tel que représenté au dessin.

## Revendications

1. Système (1) de réglage de la position angulaire d'un bras par rapport à une embase (2) sur laquelle ce bras est monté pivotant, dans lequel :
- l'embase (2) a une forme de chape, c'est-à-dire comprend une partie centrale (10) fixée à un support et deux branches latérales parallèles (11) percées de trous coaxiaux (12) ;
- le bras comprend un trou, ou plusieurs trous (17) coaxiaux, qui peu(ven)t venir en coïncidence avec les deux trous (12) desdites branches (11) de l'embase (2) ;
ce système (1) comprenant une broche (5) apte à être engagée au travers des trous (12, 17) de l'embase (2) et du bras, et des moyens de serrage (6, 7), permettant, en position de serrage, d'immobiliser le bras par rapport à l'embase (2) dans une position angulaire déterminée ;
système (1) caractérisé en ce que :
- le bras présente, au niveau de son extrémité destinée à être reliée à l'embase (2), une face convexe (4a) de forme cylindrique centrée sur l'axe du trou (17) que comprend ce bras ;
- l'embase (2) et le bras sont conformés pour délimiter un espace entre cette face convexe (4a) et ladite partie centrale (10) de l'embase (2) lorsque le bras est monté sur l'embase (2), et
- lesdits moyens de serrage comprennent au moins un bloc (6) et des moyens (7) de déplacement de ce bloc ; ledit bloc (6) a une forme de coin et est conformé pour pouvoir être engagé dans l'espace précité, ce bloc (6) présentant, sur l'un de ses côtés latéraux, une face concave (6a) de forme cylindrique correspondant à celle de ladite face convexe (4a) du bras, et, sur son côté latéral opposé, une face (6b) propre à prendre appui, par une large surface, contre ladite partie centrale (10) de l'embase (2) ; les moyens (7) de déplacement de ce bloc (6) sont conformés pour permettre de déplacer le bloc (6) selon une direction perpendiculaire à l'axe de pivotement du bras, et de serrer ce bloc (6) entre ladite face convexe (4a) et ladite partie centrale (10) de l'embase (2), de manière à ce que les faces latérales précitées (6a, 6b) de ce bloc (6) viennent étroitement en appui contre, respectivement, ladite face convexe (4a) du bras et ladite partie centrale (10) de l'embase (2), et que le bloc (6) exerce ainsi une contrainte sur ladite broche (5).

2. Système selon la revendication 1, caractérisé en ce qu'il comprend deux blocs (6) tels que précités, dont chacun est placé d'un côté du plan médian longitudinal du bras et est associé à des moyens (7) pour son déplacement.

3. Système selon la revendication 2, caractérisé en ce que les moyens (7) de déplacement de ces blocs (6) sont communs à ces deux blocs (6).

4. Système selon la revendication 2 ou la revendication 3, caractérisé en ce que les moyens de déplacement sont constitués par au moins un boulon (7) traversant les blocs (6).

5. Système selon l'une des revendications 1 à 4, caractérisé en ce que l'extrémité du bras destinée à être reliée à l'embase (2) comporte une bague cylindrique (4) pouvant pivoter par rapport à elle, cette bague (4) étant destinée à recevoir ladite broche (5) à travers son alésage (30) ; la portion de la paroi latérale de cette bague (4) tournée vers l'extérieur du bras constitue ladite face convexe (4a) du bras tandis que la portion de la paroi latérale de cette bague (4) tournée vers le bras comprend au moins une cannelure (32) ; cette même extrémité du bras comprend, entre elle et ladite bague (4), une tige (35) sollicitée par au moins un ressort (25) en direction de l'axe de la bague (4), cette tige (35) et ce ressort (25) étant conformés de manière à ce que la tige (35) soit normalement maintenue dans ladite cannelure (32) et qu'elle immobilise ainsi le bras en rotation par rapport à ladite bague (4), mais ledit ressort (25) est conformé pour se comprimer en cas d'exercice d'une contrainte sur le bras tendant à faire pivoter ce bras par rapport à la bague (4), de manière à autoriser l'échappement de la tige (35) hors de la cannelure et à permettre ainsi de libérer le pivotement du bras.

6. Système selon la revendication 5, caractérisé en ce que ladite extrémité du bras comprend deux alésages borgnes (19) dans chacun desquels sont placés un ressort (25) et une pièce cylindrique (26) contre laquelle porte ce ressort (25) ; ladite pièce cylindrique (26) peut coulisser dans ledit alésage (19) et comprend, au niveau de son extrémité axiale opposée au ressort (25), une rainure (36) pour sa prise d'appui contre la tige (35).

7. Système selon la revendication 6, caractérisé en ce que la paroi (20) délimitant le fond de chaque alésage borgne (19) est percée d'un trou axial (28) tandis que chaque pièce cylindrique (26) est également percée d'un trou axial (27), ces deux trous (27, 28) recevant, engagé à travers eux, un boulon permettant de comprimer le ressort (25) pour permettre le dégagement volontaire de la tige (35) hors de la cannelure (32).

8. Système selon l'une des revendications 5 à 7, caractérisé en ce que la bague (4) comprend plusieurs cannelures (32) pour le positionnement du bras selon différentes positions angulaires par rapport à l'embase (2).
